# EUROPÄISCHE PATENTSCHRIFT

(11) **EP 3 538 349 B1**
(45) Veröffentlichungstag und Bekanntmachung des Hinweises auf die Patenterteilung: **18.01.2023**
(21) Anmeldenummer: 17803828.7
(22) Anmeldetag: 09.11.2017
(51) Int. Cl.: B29C 64/268, B29C 64/135, B29C 64/277, B29C 64/282, B29C 64/153, B33Y 30/00

(54) **VERFAHREN UND VORRICHTUNG ZUR BEARBEITUNG EINER WERKSTOFFSCHICHT MIT ENERGETISCHER STRAHLUNG**
METHOD AND DEVICE FOR MACHINING A MATERIAL LAYER USING ENERGETIC RADIATION
PROCÉDÉ ET DISPOSITIF POUR USINER UNE COUCHE DE MATIÈRE PAR RAYONNEMENT ÉNERGÉTIQUE

(30) Priorität: 10.11.2016 DE 102016222067
(43) Veröffentlichungstag der Anmeldung: 18.09.2019
(73) Patentinhaber: Fraunhofer-ges. zur Förderung der Angewandten Forschung E.V., 80686 München (DE)
(72) Erfinder: POPRAWE, Reinhart, 52074 Aachen Orsbach (DE); EIBL, Florian, 52074 Aachen (DE); MEINERS, Wilhelm, 52074 Aachen (DE); JAUER, Lucas, 52134 Herzogenrath (DE)
(74) Vertreter: Gagel, Roland
(86) Internationale Anmeldenummer: PCT/EP2017/078738
(87) Internationale Veröffentlichungsnummer: WO 2018/087217

(56) Entgegenhaltungen:
- EP-A1- 2 926 979
- WO-A1-2016/094827
- DE-A1- 10 235 427
- US-A1- 2013 112 672

## Beschreibung

### Technisches Anwendungsgebiet

Die vorliegende Erfindung betrifft ein Verfahren sowie eine Vorrichtung zur Bearbeitung einer Werkstoffschicht mit energetischer Strahlung, insbesondere zur Herstellung von dreidimensionalen Bauteilen durch schichtweises Aufschmelzen eines pulverförmigen Werkstoffes, bei denen ein oder mehrere energetische Strahlen einer oder mehrerer zur Bearbeitung eingesetzter Strahlquellen auf eine zu bearbeitende Schicht des Werkstoffes gerichtet und durch dynamische Strahlführung über die Schicht geführt werden, um Bereiche der Schicht zu bearbeiten.

Bei pulverbettbasierten Strahlschmelzverfahren, wie z. B. dem selektiven Laserschmelzen (SLM: Selective Laser Melting) werden dreidimensionale Bauteile generativ direkt aus 3D-CAD Modellen gefertigt. In einem sich wiederholenden Prozess wird eine dünne Pulverschicht von typischerweise unter 100 µm Dicke mit einem Schieber auf einer Substratplatte aufgetragen und in einem nächsten Schritt selektiv entsprechend den Geometrieinformationen aus dem 3D-CAD Modell mit Hilfe eines oder mehrerer energetischer Strahlen, insbesondere Laserstrahlen, geschmolzen. Dieser Kreislaufprozess erlaubt die Herstellung dreidimensionaler Bauteile mit geringen Einschränkungen bezüglich der konstruktiven Komplexität. Das Verdichten des Bauteils beruht beim SLM auf einem vollständigen Schmelzen des Pulvers und der vorangegangenen Schicht. Dadurch werden Bauteildichten von bis zu 100% und mit konventionellen Fertigungsverfahren vergleichbare mechanische Eigenschaften erreicht.

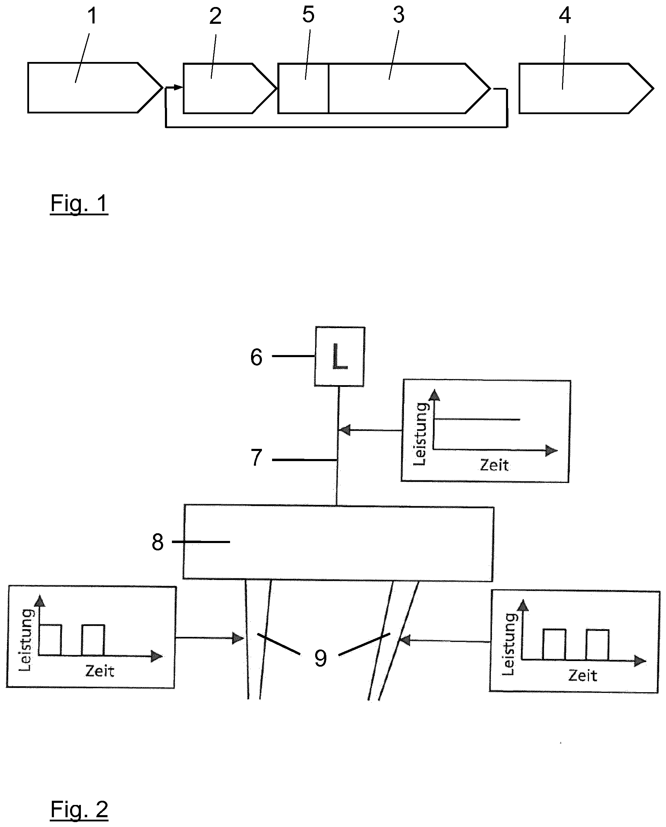

Die Prozesskette läuft bei einem derartigen Verfahren innerhalb der Fertigungsanlage bezogen auf eine Bauplattform sequentiell ab, wie dies in der Figur 1 schematisch dargestellt ist. Der wertschöpfende Belichtungsprozess, bei dem die entsprechenden Bereiche der Schicht mit der energetischen Strahlung selektiv aufgeschmolzen werden, wird durch nicht wertschöpfende Prozesse wie dem Schichtauftrag, der Prozessvorbereitung und der Prozessnachbereitung unterbrochen. Je nach verwendeter Anlagentechnik, bspw. bei Verwendung von Galvanometerscannern zur Strahlablenkung, kommt es innerhalb des wertschöpfenden Belichtungsprozesses zusätzlich zu technisch bedingten Belichtungstotzeiten, in denen zwar die zur Strahlablenkung benötigten Scannerspiegel bewegt werden, aber keine Belichtung erfolgt. Dies ist beispielsweise der Fall, wenn nacheinander zu belichtende Scanvektoren geometrisch nicht direkt aneinander anschließen. Zusätzliche nichtproduktive Zeiten treten in den Beschleunigungs- und Abbremsphasen der Scannerspiegel beim sog. Skywriting auf. Die Strahlquelle wird somit nicht zu 100% zur Belichtung genutzt.

### Stand der Technik

Neben den bisher hauptsächlich verwendeten Strahlablenksystemen auf Basis von Galvanometerscannern mit vor- oder nachgelagerter Fokussieroptik sind auch alternative Belichtungskonzepte bekannt. Dabei handelt es sich mehrheitlich um weniger komplexe Optiksysteme, welche mittels einer Bewegungsvorrichtung über die zu belichtende Fläche geführt werden. Dies bietet den Vorteil einer möglichen Skalierung von Bauraumgröße und/oder Schmelzleistung, ohne den grundlegenden Anlagenaufbau verändern zu müssen.

So zeigt bspw. die WO 2015/003804 A1 eine Vorrichtung, bei der mit Hilfe eines Achssystems ein Belichtungs- oder Bearbeitungskopf über ein Pulverbett bewegt wird. Der Bearbeitungskopf bildet mittels einer optischen Vorrichtung mehrere einzelne Laserstrahlen in einer feststehenden Anordnung als Laserspots nebeneinander oder teilweise überlappend auf die Bearbeitungsebene ab, z. B. in einer Linienanordnung senkrecht zur Bewegungsrichtung des Bearbeitungskopfes. Die Laserstrahlen werden dabei jeweils von einer separaten Strahlquelle erzeugt, mittels Lichtleitfasern zum Bearbeitungskopf geführt und simultan zur Bewegung des Bearbeitungskopfes entsprechend der zu erzeugenden Bauteilgeometrie moduliert bzw. ein- und ausgeschaltet. Die WO 2014/199149 A1 zeigt eine ähnliche Vorrichtung, bei der die jeweiligen Strahlquellen die Strahlung ohne Lichtleitfasern direkt auf die Bearbeitungsebene richten. Diese Vorrichtungen benötigen jedoch für jeden einzelnen Laserspot in der Bearbeitungsebene eine separate Strahlquelle. Auf diese Weise kann zwar die Spotanordnung über eine Erhöhung der Anzahl der Strahlquellen nahezu beliebig verbreitert werden. Dies ist allerdings mit einer linearen Erhöhung der Kosten verbunden. Zusätzlich wird der notwendige konstruktive Aufwand entsprechend erhöht.

Die US 2014/0198365 A1 beschreibt eine Belichtungsvorrichtung, bei der die Strahlung einer einzelnen Strahlquelle über einen oder mehrere Strahlteiler in mehrere Teilstrahlen aufgeteilt wird. Die Teilstrahlen werden dann jeweils mit einer eigenen Ablenkeinheit unabhängig voneinander auf die Bearbeitungsebene gerichtet. Bei dieser Anordnung muss aufgrund der konstanten Aufteilung der Laserleistung auf die einzelnen Teilstrahlen allerdings dafür Sorge getragen werden, dass die von den jeweiligen Strahlablenkvorrichtungen zu belichtende Fläche identisch ist.

Die WO 00/21735 A1 schlägt eine Belichtungsvorrichtung vor, bei der die Strahlung einer Lichtquelle über eine Vielzahl von einzelnen Lichtleitfasern, die in einem feststehenden Array angeordnet sind, auf die Bearbeitungsebene gerichtet wird. Hinter jedem Faserende wird ein Lichtventil (Light Valve) angebracht, welches in der Lage ist, die aus der Faser austretende Strahlung abhängig von einem Steuersignal entweder zu transmittieren oder zu absorbieren. Auf diese Weise können durch die Bewegung des Faserarrays und die von der Bauteilgeometrie abhängige Steuerung der Lichtventile zum Bauteil gehörige Bereiche in der Bearbeitungsebene selektiv belichtet werden. Beim Betrieb dieser Vorrichtung muss die Strahlung bestimmter bestrahlter Bereiche, die nicht zum Bauteilaufbau benötigt werden, in den zugehörigen Lichtventilen absorbiert werden. Dies führt im praktischen Einsatz allerdings zu einem sehr niedrigen Verhältnis aus eingesetzter und tatsächlich genutzter Laserleistung. Dies gilt auch für einige der bereits genannten Vorrichtungen.

DE 102 35 427 A1 offenbart die Merkmale der Oberbegriffe der Ansprüche 1 und 9.

Die oben beschriebenen Nachteile der bekannten Vorrichtungen erschweren eine wirtschaftliche Anwendung pulverbettbasierter Strahlschmelzverfahren, bspw. in der Serienproduktion metallischer Bauteile.

Die Aufgabe der vorliegenden Erfindung besteht darin, ein Verfahren sowie eine Vorrichtung zur Bearbeitung einer Werkstoffschicht mit energetischer Strahlung anzugeben, insbesondere zur Herstellung von dreidimensionalen Bauteilen durch schichtweises Aufschmelzen eines pulverförmigen Werkstoffes, das eine verbesserte Ausnutzung der eingesetzten Strahlquellen ermöglicht, ohne hierbei auf bestimmte zu bearbeitende Flächen eingeschränkt zu sein.

### Darstellung der Erfindung

Die Aufgabe wird mit dem Verfahren und der Vorrichtung gemäß den Patentansprüchen 1 und 9 gelöst. Vorteilhafte Ausgestaltungen des Verfahrens sowie der Vorrichtung sind Gegenstand der abhängigen Patentansprüche oder lassen sich der nachfolgenden Beschreibung sowie dem Ausführungsbeispiel entnehmen.

Bei dem vorgeschlagenen Verfahren werden in bekannter Weise ein oder mehrere energetische Strahlen einer oder mehrerer Strahlquellen auf eine zu bearbeitende Schicht des Werkstoffes gerichtet und durch dynamische Strahlführung über die Schicht geführt, um Bereiche der Schicht zu bearbeiten, insbesondere aufzuschmelzen. Das vorgeschlagene Verfahren zeichnet sich dadurch aus, dass wenigstens einer der energetischen Strahlen durch zeitliche Modulation auf mehrere Einzelstrahlen aufgeteilt wird, die räumlich getrennt, d.h. über unterschiedliche Strahlführungs- und/oder Strahlablenkelemente, auf die zu bearbeitende Schicht gerichtet werden. Unter einer Aufteilung durch zeitliche Modulation wird dabei verstanden, dass eine zeitliche Aufteilung des Strahls auf die räumlich getrennten Einzelstrahlen vorgenommen wird. Die Aufteilung erfolgt dabei derart, dass die Summe der Leistungen der Einzelstrahlen jeweils der Leistung des energetischen Strahls - abzüglich unvermeidbarer Leistungsverluste durch die eingesetzten optischen Bauteile - entspricht. In einer bevorzugten Ausgestaltung erfolgt die Aufteilung auf die Einzelstrahlen abwechselnd, so dass die Einzelstrahlen nie gleichzeitig auftreten. Die Aufteilung des energetischen Strahls auf die Einzelstrahlen kann dabei zeitlich periodisch erfolgen. Dies ist allerdings nicht zwingend. Ebenso muss die Aufteilung auch nicht zwingend in gleichen Leistungsanteilen auf die Einzelstrahlen erfolgen, sondern nur derart, dass die Summe der zeitlichen Leistungsverteilungen der Einzelstrahlen - abzüglich eventueller Leistungsverluste durch die zur Aufteilung verwendeten optischen Bauteile - der ursprünglichen zeitlichen Leistungsverteilung entspricht. Die Aufteilung auf die Einzelstrahlen erfolgt dabei derart, dass in Abhängigkeit von der jeweils zu bearbeitenden Fläche eine kontinuierliche Bearbeitung, bspw. ein kontinuierliches Aufschmelzen, mit dem energetischen Strahl erfolgen kann. Durch die zeitliche Aufteilung wird erreicht, dass zu jedem Zeitpunkt des Belichtungs- bzw. Bearbeitungsvorgangs jeweils die volle Leistung des energetischen Strahls für die Bearbeitung genutzt wird. Damit wird eine unterbrechungsfreie oder nahezu unterbrechungsfreie Belichtung bzw. Bearbeitung ermöglicht, bei der die Auslastung der eingesetzten Strahlquelle maximiert wird. Bei einem pulverbettbasierten Strahlschmelzverfahren kann dadurch der Anteil des wertschöpfenden Prozesses an der gesamten Prozesszeit erhöht und die Produktivität der Anlage gegenüber den bekannten Anlagen des Standes der Technik gesteigert werden. Dies ist gerade vor dem Hintergrund einer industriellen Serienfertigung ein großer Vorteil.

Die vorgeschlagene Vorrichtung zur Durchführung des Verfahrens weist entsprechend eine oder mehrere Strahlquellen auf, die einen oder mehrere energetische Strahlen emittieren, sowie wenigstens eine Strahlaufteilungseinrichtung, die wenigstens einen der energetischen Strahlen durch zeitliche Modulation auf mehrere Einzelstrahlen aufteilen kann. Die Strahlaufteilungseinrichtung ist so ausgebildet, dass die Summe der Leistungen der Einzelstrahlen bei der Aufteilung jeweils zumindest annähernd der Leistung des energetischen Strahls entspricht. Die Vorrichtung weist weiterhin eine oder mehrere dynamische Strahlführungseinrichtungen auf, über die die Einzelstrahlen auf eine zu bearbeitende Schicht des Werkstoffes gerichtet und über die Schicht geführt werden können, um Bereiche der Schicht zu bearbeiten.

Bei dem vorgeschlagenen Verfahren und der zugehörigen Vorrichtung kann je nach Ausgestaltung nur eine Strahlquelle eingesetzt werden, die einen energetischen Strahl emittiert, der entsprechend durch zeitliche Modulation auf mehrere Einzelstrahlen aufgeteilt wird. Es können auch mehrere Stahlquellen eingesetzt werden, wobei dann jede Strahlquelle einen energetischen Strahl emittiert, der entsprechend durch zeitliche Modulation auf mehrere Einzelstrahlen aufgeteilt wird. Selbstverständlich besteht auch die Möglichkeit, bei Einsatz mehrerer Strahlquellen nur den energetischen Strahl einer oder einer Teilmenge der Strahlungsquellen in der oben angegebenen Weise aufzuteilen.

Die Strahlführungseinrichtung kann in unterschiedlicher Weise ausgestaltet sein. So kann eine Strahlführungseinrichtung eingesetzt werden, die wie bei einigen der in der Beschreibungseinleitung genannten Vorrichtungen des Standes der Technik als Bearbeitungskopf ausgebildet ist, der zur Belichtung bzw. Bearbeitung über die zu bearbeitende Schicht geführt wird. Die Strahlführungseinrichtung kann alternativ auch dynamische Strahlablenkeinheiten aufweisen, bspw. in Form von Galvanometerscannern, die die Einzelstrahlen durch entsprechende dynamische Strahlablenkung über die zu bearbeitende Schicht führen. Auch weitere Techniken zur Strahlführung, wie bspw. mit Mikrospiegelarrays, Spiegelsystemen oder Polygonscannern, oder eine Kombination mehrerer Techniken sind möglich.

In einer vorteilhaften Ausgestaltung wird jeder Einzelstrahl über eine eigene dynamische Strahlablenkeinrichtung auf die zu bearbeitende Schicht des bspw. pulverförmigen Werkstoffes gerichtet. Dies ermöglicht eine voneinander unabhängige dynamische Ablenkung der Einzelstrahlen.

Im Folgenden werden das vorgeschlagene Verfahren sowie die vorgeschlagene Vorrichtung anhand der bevorzugten Anwendung der Herstellung von dreidimensionalen Bauteilen durch schichtweises Aufschmelzen eines pulverförmigen Werkstoffes mit der energetischen Strahlung erläutert. Das Verfahren und die Vorrichtung sowie deren Ausgestaltungen sind jedoch nicht auf diese Anwendung beschränkt. Sie bieten auch bei anderen Bearbeitungsprozessen, bei denen mit der energetischen Strahlung eine Werkstoffschicht bearbeitet wird, bspw. beim Laserschneiden, entsprechende Vorteile.

Bei konventionellen Strahlschmelzprozessen mit Laserstrahlung, bei denen die zum Schmelzen verwendete Strahlung mittels Strahlablenkung, bspw. mit einem Galvanometerscanner, entsprechend der Schichtinformation des Bauteils über das Pulverbett geführt wird, können Totzeiten auftreten, in denen der Strahl nicht auf das Pulverbett gerichtet wird. So wird bei Galvanometerscannern zum Teil das sog. Skywriting eingesetzt, um die Scangeschwindigkeit und damit den Energieeintrag zu homogenisieren. Die bei abrupten Richtungsänderungen des Scanpfades üblicherweise nötigen Abbrems- und Beschleunigungsvorgänge des Scannerspiegels werden dann bei deaktivierter Strahlung durchgeführt. Die für diese Vorgänge benötigte Zeit steht damit nicht für die eigentliche Belichtung zur Verfügung. Auch bei geometrisch nicht aneinander anschließenden Scanvektoren treten Totzeiten auf. In diesem Fall müssen unabhängig von der Verwendung von Skywriting die Scannerspiegelbewegungen zur Repositionierung bei deaktivierter Strahlung durchgeführt werden. Die für diese Vorgänge benötigte Zeit steht dann ebenfalls nicht für die eigentliche Belichtung zur Verfügung.

In einer vorteilhaften Ausgestaltung des vorgeschlagenen Verfahrens sowie der zugehörigen Vorrichtung erfolgt bei Einsatz von dynamischen Strahlablenksystemen, wie bspw. Galvanometerscannern, die Aufteilung auf die Einzelstrahlen und damit auf die den jeweiligen Einzelstrahlen zugeordneten Strahlablenkeinrichtungen abwechselnd. Die Strahlablenkeinrichtungen werden dann so aufeinander abgestimmt betrieben und der Wechsel zwischen den Strahlablenkeinrichtungen erfolgt derart, dass während der Bearbeitung der Schicht, im Folgenden auch als Belichtung bezeichnet, die oben angegebenen Totzeiten minimiert werden. Zwischen den Einzelstrahlen bzw. den dynamischen Strahlablenkeinrichtungen für die Einzelstrahlen wird dann bspw. beim Wechsel zwischen nicht aneinander anschließenden Scanvektoren und/oder bei abrupten Richtungswechseln des Scanpfades umgeschaltet. Dies kann mit einer schnell schaltenden Strahlweiche erfolgen. So kann bspw. beim Einsatz von zwei dynamischen Strahlablenkeinrichtungen entsprechend der Aufteilung auf zwei Einzelstrahlen die Strahlung immer durch die erste Strahlablenkeinrichtung über zu belichtende Flächen geführt werden, während durch die zweite Strahlablenkeinrichtung Repositionierungs-, Abbrems- oder Beschleunigungsvorgänge durchgeführt werden. Dies ermöglicht einen durchgehenden Betrieb der eingesetzten Strahlungsquelle bzw. eine durchgehende Verwendung der vollen von der Strahlungsquelle erzeugten Strahlungsleistung zum Aufschmelzen der Schicht. Auch ein Belichten während des Beschichtungsvorgangs ist dabei prinzipiell möglich.

Das vorgeschlagene Verfahren und die zugehörige Vorrichtung lassen sich bei allen pulverbettbasierten Strahlschmelzverfahren einsetzen. Beispiele sind das selektive Laserschmelzen (SLM) oder das selektive Lasersintern (SLS). Dies ist selbstverständlich keine abschließende Aufzählung. Mit dem vorgeschlagenen Verfahren und der zugehörigen Vorrichtung ergibt sich ein gegenüber den bisher bekannten Lösungen verbesserter Nutzungsgrad der eingesetzten Strahlquelle. Damit wird eine erhebliche Beschleunigung des Belichtungsprozesses erreicht, die je nach Bauteilgeometrie und Anlagenbeschaffenheit zwischen 15% und 250% betragen kann. Das Verfahren und die Vorrichtung ermöglichen einen nahezu unterbrechungsfreien Betrieb der eingesetzten Strahlquellen. Das Verfahren und die Vorrichtung weisen vor allem beim Einsatz innerhalb industrieller Fertigungsumgebungen ein großes Potential auf und ermöglichen die generative Fertigung von Bauteilen mit maximierter Wertschöpfung. Daraus resultieren eine deutliche Steigerung der Produktivität der entsprechenden Fertigungseinrichtung und somit auch deutliche wirtschaftliche Vorteile, die den Einsatz von pulverbettbasierten Strahlschmelzverfahren im Rahmen der industriellen Serienfertigung stark begünstigen. Als energetische Strahlen kommen dabei bevorzugt Laserstrahlen zum Einsatz. Das Verfahren lässt sich jedoch auch mit anderen energetischen Strahlen wie bspw. Elektronen- oder Ionenstrahlen einsetzen.

### Kurze Beschreibung der Zeichnungen

Das vorgeschlagene Verfahren sowie die zugehörige Vorrichtung werden nachfolgend anhand eines Ausführungsbeispiels in Verbindung mit den Zeichnungen nochmals näher erläutert. Hierbei zeigen:
- Fig. 1: eine schematische Darstellung der Prozesskette beim selektiven Laserschmelzen;
- Fig. 2: eine schematische Darstellung eines Beispiels für das vorgeschlagene Verfahren; und
- Fig. 3: ein Beispiel für eine andere Aufteilung der Leistung auf die Einzelstrahlen.

### Wege zur Ausführung der Erfindung

Bei pulverbettbasierten Strahlschmelzverfahren wie dem selektiven Laserschmelzen wird der wertschöpfende Belichtungsprozess durch nicht wertschöpfende Prozesse wie den Schichtauftrag, die Prozessvorbereitung und die Prozessnachbereitung unterbrochen. Diese Prozesskette ist schematisch in der Figur 1 dargestellt, die die Prozesse der Prozessvorbereitung 1, des Schichtauftrags 2, der Belichtung 3 sowie der Prozessnachbereitung 4 in der festgelegten Abfolge zeigt. Die Prozesse des Schichtauftrags 2 sowie der Belichtung 3 wiederholen sich dabei Schicht für Schicht bis das dreidimensionale Bauteil fertig aufgebaut ist. Das vorgeschlagene Verfahren und die zugehörige Vorrichtung ermöglichen dabei eine Optimierung der Belichtung, bei der üblicherweise Totzeiten 5 auftreten, während denen der energetische Strahl nicht auf die Schicht auftrifft und damit keine Belichtung stattfindet. In Figur 1 ist schematisch der Anteil der Totzeiten 5 am Belichtungsprozess 2 angedeutet. Diese können durch Beschleunigungs- und Abbremsphasen der Scannerspiegel oder durch nicht zusammenhängende, nacheinander zu belichtende Scanvektoren bedingt sein. Mit dem vorgeschlagenen Verfahren und der zugehörigen Vorrichtung wird der Anteil dieser Totzeiten 5 am Belichtungsprozess minimiert.

Figur 2 zeigt hierzu ein Beispiel für eine Umsetzung des vorgeschlagenen Verfahrens, bei dem der Laserstrahl 7 einer Laserstrahlquelle 6 abwechselnd in zwei Einzelstrahlen aufgeteilt wird, die die zu belichtende Schicht an räumlich unterschiedlichen Stellen treffen. Die Aufteilung erfolgt durch eine Strahlaufteilungseinrichtung 8, die in der Figur schematisch angedeutet ist. Durch die in diesem Beispiel vorgenommene zeitliche Modulation der Aufteilung des Laserstrahls 7 auf die Einzelstrahlen 9 wird erreicht, dass die Leistungsverteilungen der Einzelstrahlen (abzüglich eventueller Leistungsverluste durch die verwendeten optischen Bauteile) der ursprünglichen zeitlichen Leistungsverteilung des Laserstrahls 7 entspricht. Die Leistungsverluste sind daher minimal und die von der Laserstrahlquelle 6 bereitgestellte Laserleistung wird während des gesamten Belichtungsprozesses einer Schicht unterbrechungsfrei oder zumindest nahezu unterbrechungsfrei für die Belichtung der Schicht genutzt. Die Figur 2 zeigt hierzu rechts oben die Leistung des von der Laserstrahlquelle 6 erzeugten Laserstrahls 7 über der Zeit. Die Laserstrahlquelle 6 wird im Dauerstrichbetrieb (cw) betrieben. Im unteren Teil sind rechts und links die zeitlichen Leistungsverteilungen für die beiden durch die Strahlaufteilungseinrichtung 8 erzeugten Einzelstrahlen 9 zu erkennen. Die Diagramme zeigen die abwechselnde Aufteilung des Laserstrahls 7 auf die beiden Einzelstrahlen 9 über der Zeit. In diesem Beispiel ist eine zeitlich periodische Aufteilung zu erkennen.

Dies ist jedoch nicht zwingend erforderlich. Die zeitliche Aufteilung wird je nach Belichtungsaufgabe in Abhängigkeit von der zu belichtenden Geometrie so gewählt, dass ein kontinuierliches Schmelzen ohne oder mit nur minimaler zeitlicher Unterbrechung erfolgen kann. So kann in einer Ausgestaltung bspw. eine zeitliche Aufteilung der kontinuierlichen Strahlung auf z.B. n zeitlich entsprechend versetzte mit einem Duty Cycle von 1/n gepulst modulierte Einzelstrahlen erfolgen, die durch die räumliche Aufteilung zum Aufschmelzen an verschiedenen Positionen oder für Mehrfachbelichtungen, bspw. zum Vor- oder Nachwärmen, verwendet werden.

In dem in Figur 2 dargestellten Beispiel kann jeder der beiden Einzelstrahlen 9 bspw. mit einer eigenen dynamischen Stahlablenkeinrichtung, insbesondere mit jeweils einem Galvanoscanner, auf die zu belichtende Schicht gerichtet werden. Als Strahlaufteilungseinrichtung kann bspw. eine schnellschaltende Strahlweiche eingesetzt werden. Durch geeignetes Umschalten zwischen den beiden Einzelstrahlen bzw. Galvanoscannern und geeignete Ansteuerung dieser Scanner können die durch Repositionierungs-, Abbremsoder Beschleunigungsvorgänge verursachten Totzeiten vermieden oder verringert werden. So kann bspw. der Laserstrahl 7 über den ersten Galvanoscanner über die zu belichtende Fläche geführt werden, während durch den zweiten Scanner gerade Repositionierungs-, Abbremsoder Beschleunigungsvorgänge durchgeführt werden und umgekehrt. Der jeweils andere Scanner wird dabei vor dem Umschalten bereits in die erforderliche Position gebracht oder so betrieben, dass er sich beim Umschalten gerade in der entsprechenden Position befindet und die weitere Strahlablenkung bis zum nächsten Umschaltvorgang ohne zusätzliche Beschleunigungs- oder Abbremsvorgänge durchführen kann. Auf diese Weise können die in Figur 1 dargestellten Totzeiten deutlich verringert werden. Entsprechende Totzeiten treten dann im Idealfall nur noch durch die Umschaltvorgänge zwischen den einzelnen Galvanoscannern oder Einzelstrahlen auf.

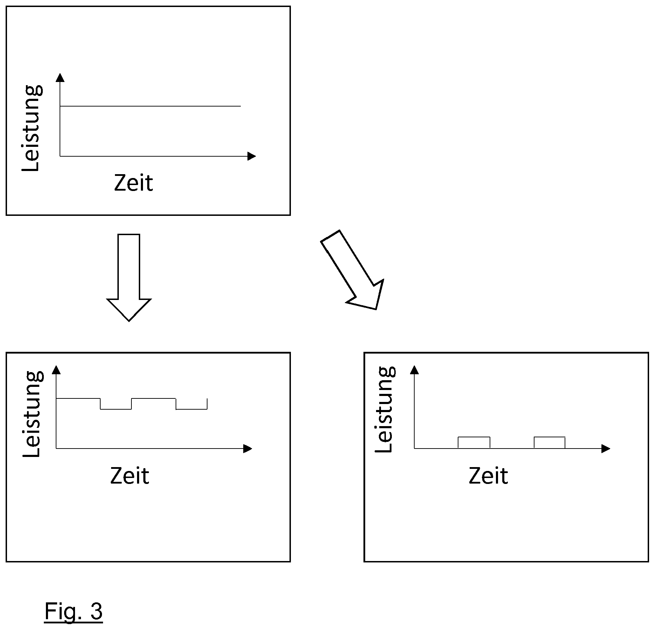

Die Aufteilung des energetischen Strahls kann auch so vorgenommen werden, dass einer der Einzelstrahlen weiterhin ein energetisches Dauersignal liefert, welches allerdings zeitlich in der Leistung moduliert ist (Leistungswobbeln), und nur die "überschüssige" Leistung auf einen anderen Einzelstrahl aufgeteilt wird. Der Einzelstrahl mit der überschüssigen Leistung ist damit zeitlich nicht immer existent. Dies ist in Figur 3 schematisch dargestellt, die im oberen Diagramm die Leistung des von der Laserstrahlquelle erzeugten Laserstrahls über der Zeit und in den unteren Diagrammen rechts und links die zeitlichen Leistungsverteilungen für die beiden durch die Strahlaufteilungseinrichtung erzeugten Einzelstrahlen zeigt.

### Bezugszeichenliste

- 1: Prozessvorbereitung
- 2: Schichtauftrag
- 3: Belichtung
- 4: Prozessnachbereitung
- 5: Totzeiten
- 6: Laserstrahlquelle
- 7: Laserstrahl
- 8: Strahlaufteilungseinrichtung
- 9: Einzelstrahlen

## Patentansprüche

1. Verfahren zur Bearbeitung einer Werkstoffschicht mit energetischer Strahlung, insbesondere zur Herstellung von dreidimensionalen Bauteilen durch schichtweises Aufschmelzen eines pulverförmigen Werkstoffes, bei dem
in einem Belichtungsprozess ein oder mehrere energetische Strahlen (7) einer oder mehrerer Strahlquellen (6) auf eine zu bearbeitende Schicht gerichtet und durch dynamische Strahlführung über die Schicht geführt werden, um Bereiche der Schicht zu bearbeiten,
**dadurch gekennzeichnet,**
**dass** wenigstens einer der energetischen Strahlen (7) während des Belichtungsprozesses durch zeitliche Modulation auf mehrere Einzelstrahlen (9) aufgeteilt wird, also eine zeitliche Aufteilung des wenigstens einen Strahls (7) auf die Einzelstrahlen (9) vorgenommen wird, die räumlich getrennt auf die zu bearbeitende Schicht gerichtet werden, wobei die Aufteilung so erfolgt, dass die Summe der Leistungen der Einzelstrahlen (9) abzüglich von durch die Aufteilung bedingten Leistungsverlusten der Leistung des energetischen Strahls (7) entspricht.

2. Verfahren nach Anspruch 1,
**dadurch gekennzeichnet,**
**dass** jeder Einzelstrahl (9) über eine eigene dynamische Strahlablenkeinrichtung auf die zu bearbeitende Schicht gerichtet wird.

3. Verfahren nach Anspruch 1 oder 2,
**dadurch gekennzeichnet,**
**dass** der energetische Strahl (7) durch die zeitliche Modulation abwechselnd auf die Einzelstrahlen (9) aufgeteilt wird.

4. Verfahren nach Anspruch 2,
**dadurch gekennzeichnet,**
**dass** der energetische Strahl (7) durch die zeitliche Modulation abwechselnd auf die Einzelstrahlen (9) und damit auf die Strahlablenkeinrichtungen aufgeteilt wird, wobei die Strahlablenkeinrichtungen so aufeinander abgestimmt betrieben werden und der Wechsel zwischen den Strahlablenkeinrichtungen so erfolgt, dass während der Bearbeitung der Schicht Zeiten minimiert werden, in denen der Strahl nicht auf die Schicht trifft.

5. Verfahren nach Anspruch 4,
**dadurch gekennzeichnet,**
**dass** der Wechsel zwischen den Strahlablenkeinrichtungen beim Wechsel zwischen nicht aneinander anschließenden Scanvektoren und/oder bei abrupten Richtungswechseln in einem Bearbeitungspfad für den energetischen Strahl (7) erfolgt.

6. Verfahren nach Anspruch 1 oder 2,
**dadurch gekennzeichnet,**
**dass** der energetische Strahl (7) durch die zeitliche Modulation auf zwei Einzelstrahlen (9) aufgeteilt wird, von denen ein Einzelstrahl eine Amplitudenmodulation von < 100% aufweist.

7. Verfahren nach einem der Ansprüche 1 bis 6,
**dadurch gekennzeichnet,**
**dass** die Aufteilung auf die Einzelstrahlen (9) über eine oder mehrere Strahlweichen für den energetischen Strahl (7) erfolgt.

8. Verfahren nach einem der Ansprüche 1 bis 7,
**dadurch gekennzeichnet,**
**dass** die eine oder die mehreren Strahlquellen (6) im Dauerstrichbetrieb betrieben werden.

9. Vorrichtung zur Bearbeitung einer Werkstoffschicht mit energetischer Strahlung, insbesondere zur Herstellung von dreidimensionalen Bauteilen durch schichtweises Aufschmelzen eines pulverförmigen Werkstoffes, die wenigstens aufweist:
- eine oder mehrere Strahlquellen (6), die einen oder mehrere energetische Strahlen (7) emittieren, **dadurch gekennzeichnet, dass**
- wenigstens eine Strahlaufteilungseinrichtung (8), die wenigstens einen der energetischen Strahlen (7) während eines Belichtungsprozesses einer zu bearbeitenden Schicht durch zeitliche Modulation auf mehrere Einzelstrahlen (9) aufteilen kann, also eine zeitliche Aufteilung des wenigstens einen Strahls (7) auf die Einzelstrahlen (9) vornehmen kann, und
- eine oder mehrere dynamische Strahlführungseinrichtungen, über die die Einzelstrahlen (9) während des Belichtungsprozesses auf die zu bearbeitende Schicht gerichtet und über die Schicht geführt werden können, um Bereiche der Schicht zu bearbeiten,
wobei die Strahlaufteilungseinrichtung (8) so ausgebildet ist, dass die Summe der Leistungen der Einzelstrahlen (9) bei der Aufteilung jeweils der Leistung des energetischen Strahls (7) entspricht.

10. Vorrichtung nach Anspruch 9,
**dadurch gekennzeichnet,**
**dass** für jeden Einzelstrahl (9) eine eigene dynamische Strahlablenkeinrichtung vorhanden ist, über die der Einzelstrahl (9) auf die zu bearbeitende Schicht gerichtet wird.

11. Vorrichtung nach Anspruch 9 oder 10,
**dadurch gekennzeichnet,**
**dass** die Strahlaufteilungseinrichtung (8) so ausgebildet ist, dass sie den energetischen Strahl (7) durch die zeitliche Modulation abwechselnd auf die Einzelstrahlen (9) aufteilt.

12. Vorrichtung nach Anspruch 10,
**dadurch gekennzeichnet,**
**dass** eine Steuereinheit vorhanden ist, die die Strahlaufteilungseinrichtung (8) und die Strahlablenkeinrichtungen so ansteuert, dass
- der energetische Strahl (7) durch die zeitliche Modulation abwechselnd auf die Einzelstrahlen (7) und damit auf die Strahlablenkeinrichtungen aufgeteilt wird,
- die Strahlablenkeinrichtungen so aufeinander abgestimmt betrieben werden und
- der Wechsel zwischen den Strahlablenkeinrichtungen so erfolgt,
**dass** während der Bearbeitung der Schicht Zeiten minimiert werden, in denen der Strahl nicht auf die Schicht trifft.

13. Vorrichtung nach Anspruch 9 oder 10,
**dadurch gekennzeichnet,**
**dass** die Strahlaufteilungseinrichtung (8) so ausgebildet ist, dass sie den energetischen Strahl (7) durch die zeitliche Modulation auf zwei Einzelstrahlen (9) aufteilt, von denen ein Einzelstrahl eine Amplitudenmodulation von < 100% aufweist.

14. Vorrichtung nach einem der Ansprüche 9 bis 13, **dadurch gekennzeichnet,**
**dass** die Strahlaufteilungseinrichtung (8) eine oder mehrere Strahlweichen aufweist.

## Claims

1. Method for machining a material layer using energetic radiation, in particular in order to produce three-dimensional components by melting a particulate material in layers, in which
in an irradiation process one or more energetic beams (7) of one or more beam sources (6) are directed onto a layer to be machined and guided over the layer by means of a dynamic beam guidance system in order to machine regions of the layer,
**characterized in that**
during the irradiation process at least one of the energetic beams (7) is separated into multiple individual beams (9) by modulation over time, meaning that a temporal separation of the at least one (7) beam onto the individual beams is carried out, said individual beams being directed onto the layer to be machined in a spatially separated manner, wherein the separation is carried out in such manner that the sum of the power of the individual beams (9) corresponds to the power of the respective energetic beam (7) minus power losses caused by the separation process.

2. Method according to Claim 1,
**characterized in that**
each individual beam (9) is directed onto the layer to be machined by its own dynamic beam deflection device.

3. Method according to Claim 1 or 2,
**characterized in that**
the energetic beam (7) is separated into the individual beams (9) in alternating manner by said modulation over time.

4. Method according to Claim 2,
**characterized in that**
the energetic beam (7) is separated into the individual beams (9) in alternating manner by said modulation over time and is thus separated onto the beam deflection devices, wherein the beam deflection devices are operated in coordination with each other in such manner and the switch between the beam deflection devices is effected in such manner that times for which the beam does not reach the layer during the machining is minimised.

5. Method according to Claim 4,
**characterized in that**
the switch between the beam deflection devices takes place for the energetic beam (7) when changing between non-adjacent scan vectors and/or upon sudden changes of a direction in a machining path.

6. Method according to Claim 1 or 2,
**characterized in that**
the energetic beam (7) is separated into two individual beams (9) by modulation over time, of which one individual beam has an amplitude modulation of < 100%.

7. Method according to any one of Claims 1 to 6, **characterized in that**
the separation into the individual beams (9) is effected via one or more beam switches for the energetic beam (7).

8. Method according to any one of Claims 1 to 7, **characterized in that**
the one or more beam sources (6) is/are operated in continuous wave mode.

9. Device for machining a material layer using energetic radiation, in particular in order to produce three-dimensional components by melting a particulate material in layers, including at least:
- one or more beam sources (6) which emit one or more energetic beams (7),
**characterized in that**
- at least one beam splitter device (8) which can separate at least one of the energetic beams (7) during an irradiation process of a to be machined layer into multiple individual beams (9) by modulation over time, meaning that it can carry out a temporal separation of the at least one (7) beam onto the individual beams, and
- one or more dynamic beam guidance apparatuses, via which the individual beams (9) can be directed during the irradiation process onto the layer to be machined and guided over the layer in order to machine regions of the layer,
wherein the beam splitter device (8) is designed such that the sum of the power of the individual beams (9) corresponds to the power of the respective energetic beam (7) upon separation.

10. Device according to Claim 9,
**characterized in that**
a dedicated dynamic beam deflection device is present for each individual beam (9), via which the individual beam (9) is directed onto the layer to be machined.

11. Device according to Claim 9 or 10,
**characterized in that**
the beam splitter device (8) is designed in such manner that it separates the energetic beam (7) into the individual beams (9) in alternating manner by said modulation over time.

12. Device according to Claim 10,
**characterized in that**
a control unit is present which actuates the beam splitter device (8) and the beam deflection devices in such manner that
- the energetic beam (7) is separated into the individual beams (9) and thus also to the beam deflection devices in alternating manner by said modulation over time,
- the beam deflection devices are operated in coordination with each other in such manner and
- switching between the beam deflection devices is carried out in such manner
that times in which the beam does not impinge on the layer during machining of the layer are minimised.

13. Device according to Claim 9 or 10,
**characterized in that**
the beam splitter device (8) is embodied such that it separates the energetic beam (7) by the modulation over time into two individual beams (9), of which one individual beam has an amplitude modulation of < 100%.

14. Device according to any one of Claims 9 to 13, **characterized in that**
the beam splitter device (8) includes one or more beam switches.

## Revendications

1. Procédé de traitement d'une couche de matériau avec un rayonnement énergétique, notamment pour la fabrication de composants tridimensionnels par fusion couche par couche d'un matériau pulvérulent, dans lequel,
lors d'un processus d'exposition, un ou plusieurs faisceaux énergétiques (7) d'une ou plusieurs sources de faisceaux (6) sont dirigés vers une couche à traiter et guidés par un guidage dynamique du faisceau sur la couche, pour traiter des zones de la couche,
**caractérisé en ce que** au moins un des faisceaux énergétiques (7) pendant le processus d'exposition par modulation temporelle est divisé en plusieurs faisceaux individuels (9), de sorte qu'une division temporelle du au moins un faisceau (7) en faisceaux individuels (9) soit effectuée, qui sont dirigés de manière spatialement séparée vers la couche à traiter, dans lequel la division a lieu de telle sorte que la somme de la puissance des faisceaux individuels (9) moins les pertes de puissance causées par la division corresponde à la puissance du faisceau énergétique (7) .

2. Procédé selon la revendication 1,
**caractérisé en ce que** chaque faisceau individuel (9) est dirigé par l'intermédiaire de son propre dispositif de déviation dynamique de faisceau sur la couche à traiter.

3. Procédé selon la revendication 1 ou 2,
**caractérisé en ce que** que le faisceau énergétique (7) est divisé par la modulation temporelle alternativement sur les faisceaux individuels (9).

4. Procédé selon la revendication 2,
**caractérisé en ce que** le faisceau énergétique (7) est divisé par la modulation temporelle alternativement sur les faisceaux individuels (9) et se répartit ainsi entre les dispositifs de déviation de faisceau, dans lequel les dispositifs de déviation de faisceau sont actionnés de sorte qu'ils soient coordonnés les uns avec les autres et la commutation entre les dispositifs de déviation de faisceau s'effectue de telle sorte que pendant le traitement de la couche les temps sont minimisés, pendant lesquels le faisceau ne rencontre pas la couche.

5. Procédé selon la revendication 4,
**caractérisé en ce que** la commutation entre les dispositifs de déviation de faisceau a lieu lors d'une commutation entre des vecteurs de balayage non adjacents et/ou de brusques changements de direction dans un trajet de traitement pour le faisceau énergétique (7).

6. Procédé selon la revendication 1 ou 2,
**caractérisé en ce que** le faisceau énergétique (7) est divisé par la modulation temporelle en deux faisceaux individuels (9), dont un seul faisceau présente une modulation d'amplitude de < 100 %.

7. Procédé selon une des revendications 1 à 6, **caractérisé en ce que** la division en faisceaux individuels (9) a lieu par l'intermédiaire d'un ou plusieurs déflecteurs de faisceaux pour le faisceau énergétique (7).

8. Procédé selon une des revendications 1 à 7, **caractérisé en ce que** la ou les sources de faisceaux (6) fonctionnent en mode continu.

9. Dispositif de traitement d'une couche de matériau par rayonnement énergétique, notamment pour la réalisation de composants tridimensionnels par fusion couche par couche d'un matériau pulvérulent, qui présente au moins :
- une ou plusieurs sources de faisceau (6) qui émettent un ou plusieurs faisceaux énergétiques (7), **caractérisé en ce que**
- au moins un dispositif de séparation de faisceau (8) qui peut diviser au moins un des faisceaux énergétiques (7) lors d'un processus d'exposition d'une couche à traiter par modulation temporelle en plusieurs faisceaux individuels (9), c'est-à-dire peut effectuer une division temporelle du au moins un faisceau (7) en faisceaux individuels (9), et
- un ou plusieurs dispositifs de guidage de faisceaux dynamiques, par l'intermédiaire desquels les faisceaux individuels (9) pendant le processus d'exposition sont dirigés sur la couche à traiter et peuvent être guidés sur la couche, pour traiter des zones de la couche,
dans lequel le dispositif de séparation de faisceau (8) est conçu de telle sorte que la somme de la puissance des faisceaux individuels (9) corresponde lors de la division respectivement à la puissance du faisceau énergétique (7).

10. Dispositif selon la revendication 9, **caractérisé en ce que**
chaque faisceau individuel (9) possède son propre dispositif de déviation dynamique de faisceau, par lequel le faisceau individuel (9) est dirigé sur la couche à traiter.

11. Dispositif selon la revendication 9 ou 10, **caractérisé en ce que** le dispositif de séparation de faisceau (8) est conçu de telle sorte qu'il divise le faisceau énergétique (7) par la modulation temporelle alternativement sur les faisceaux individuels (9).

12. Dispositif selon la revendication 10, **caractérisé en ce qu'**une unité de commande est présente, qui commande le dispositif de séparation de faisceau (8) et les dispositifs de déviation de faisceau de telle sorte que
- le faisceau énergétique (7) soit divisé par la modulation temporelle alternativement en faisceaux individuels (7) et donc réparti sur les dispositifs de déviation de faisceau,
- les dispositifs de déviation de faisceau soient actionnés de sorte coordonnée et
- la commutation entre les dispositifs de déviation de faisceau soit effectuée de telle sorte que pendant le traitement de la couche les temps sont minimisés, pendant lesquels le faisceau ne rencontre pas la couche.

13. Dispositif selon la revendication 9 ou 10, **caractérisé en ce que** le dispositif de séparation de faisceau (8) est conçu de manière à émettre le faisceau énergétique (7) par modulation temporelle en deux faisceaux individuels (9), dont un seul faisceau présente une modulation d'amplitude de < 100 %.

14. Dispositif selon une des revendications 9 à 13, **caractérisé en ce que** le dispositif de séparation de faisceau (8) comporte un ou plusieurs déflecteurs de faisceau.
